# EUROPEAN PATENT APPLICATION

(11) **EP 4 478 028 A1**
(43) Date of publication of application: **18.12.2024**
(21) Application number: 24180826.0
(22) Date of filing: 07.06.2024
(51) Int. Cl.: G01N 15/1404, G01N 15/1409, G01N 15/14, G01N 35/00, G01N 35/10, G01N 15/10

(54) **METHOD FOR BACKGROUND DETECTION OF SAMPLE PIPELINE OF SAMPLE PROCESSOR AND SAMPLE PROCESSOR**

(30) Priority: 08.06.2023 CN 202310673610
(71) Applicant: Beckman Coulter Biotechnology (Suzhou) Co., Ltd., Suzhou, Jiangsu 215123 (CN)
(72) Inventor: GU, Qi, Suzhou (CN); TANG, Linqun, Suzhou (CN); GUO, Yi, Suzhou (CN); YANG, Tao, Suzhou (CN)
(74) Representative: Maiwald GmbH

(57) **Abstract**

A method for background detection of a sample pipeline of a sample processor, a sample processor and a computer-readable medium are provided. The sample pipeline is configured to connect a sample probe for aspirating a sample out of a sample container to a flow cell. The method includes the following steps executed by a control device: supplying sheath liquid to the flow cell via the sample pipeline; and detecting the sheath liquid flowing through the flow cell to obtain background detection data. The method according to the present disclosure performs background detection on sample pipeline of the sample processor by using sheath liquid, omitting preparation of a specialized fluid for background detection, significantly reducing costs and avoiding introduction of impurities to increase the background when the specialized fluid is loaded into the sample processor. Therefore, the detection precision and accuracy of the sample processor can be improved.

## Description

### FIELD

The present disclosure relates to a method for background detection of a sample pipeline of a sample processor and a sample processor including a control device that is configured to implement the method, for example, a flow cytometer sorter or analyzer.

### BACKGROUND

This section only provides background information related to the present disclosure, which is not necessarily a prior art.

Sample processors are generally used to analyze liquid samples including small suspended particles (e.g., biological particles such as extracellular vesicles, non-biological particles such as beads) or cells and/or to sort the particles or cells therein. As well known, background noise (also known as "background signal" or simply "background") may adversely affect detection results. For example, for a sample processor that detects nanoparticles in a sample, background noise may have a great impact on the detection results.

Before the sample is processed, it is necessary to ensure that the sample pipeline for delivering the sample is sufficiently cleaned, that is, to clean the sample pipeline to reduce the adverse impact of the background noise on the detection results. Further, before the sample is processed, it is necessary to detect the background noise of the sample pipeline, so as to ensure that the background noise is sufficiently low to meet the detection requirements. For this purpose, it is necessary to prepare a detection agent (e.g., pure water) with a sufficiently low background signal, and allow the detection agent to flow through the sample pipeline to detect the background noise of the sample pipeline.

### SUMMARY

### TECHNICAL PROBLEMS

For the existing sample processor, the cost of preparing a detection agent is high. Especially, the greater the used amount of the detection agent is, the higher the preparation cost is. On the other hand, if there is not enough detection agent for background detection, it cannot be effectively determined whether the background noise meets the requirements. In addition, impurities are easily introduced during the preparation, storage, and/or replacement of the detection agent to the sample pipeline, resulting in an increased background noise.

### TECHNICAL SOLUTIONS

In view of the above technical problems, it is proposed in the present disclosure a simplified solution for background detection of a sample pipeline of a sample processor. The solution according to the present disclosure can omit the preparation of a detection agent, significantly reduce the cost, hardly introduce foreign matters, and ensure a sufficiently low background noise.

According to an aspect of the present disclosure, there is provided a method for background detection of a sample pipeline of a sample processor, wherein the sample pipeline connects a sample probe for aspirating a sample out of a sample container to a flow cell. The method comprises the following steps executed by a control device: supplying sheath liquid to the flow cell via the sample pipeline; and detecting the sheath liquid flowing through the flow cell to obtain background detection data.

In some embodiments according to the present disclosure, the method further comprises: before the sheath liquid is introduced into the sample pipeline, filtering the sheath liquid by allowing the sheath liquid to flow through a filter.

In some embodiments according to the present disclosure, the filter is configured to filter a nano-scaled particular.

In some embodiments according to the present disclosure, a wash station is provided at the sample needle, and a sheath detection pipeline is provided between the wash station and a sheath container, and the filter is arranged in the sheath detection pipeline. The method further comprises: supplying the sheath liquid stored in the sheath container to the wash station via the sheath detection pipeline; and supplying the sheath fluid supplied in the wash station to the flow cell via the sample pipeline for background detection.

In some embodiments according to the present disclosure, the method further comprises: before the sheath liquid is introduced into the sample pipeline for the background detection, cleaning the sample probe in the wash station; and discharging the waste liquid generated from cleaning by a waste pump through a waste pipeline connected to the wash station, or by a vacuum pump through the sample pipeline and then out of the flow cell.

In some embodiments according to the present disclosure, during the sheath cleaning of the sample probe and during the background detection, an open end of the sample probe is maintained in the wash station.

In some embodiments according to the present disclosure, a valve is provided in the sheath detection pipeline and configured to control communication or interruption of the sheath detection pipeline.

In some embodiments according to the present disclosure, the method further comprises: cleaning the sample pipeline before the sheath liquid is introduced into the sample pipeline for background detection.

In some embodiments according to the present disclosure, the method further comprises: comparing the background detection data with predetermined background data, wherein if the background detection data is larger than the predetermined background data, the method further comprises cleaning the sample pipeline; and if the background detection data is smaller than or equal to the predetermined background data, it is ready to detect a sample.

According to another aspect of the present disclosure, there is provided a sample processor, comprising a control device that is configured to implement the method described above.

In some embodiments according to the present disclosure, a peristaltic pump is provided in the sample pipeline and configured to pump the sheath liquid or a sample from the sample probe to the flow cell.

In some embodiments according to the present disclosure, a piston pump and a reversing valve are provided in the sample pipeline. The reversing valve can be switched between a first position for communicating the sample probe to the piston pump and a second position for communicating the piston pump to the flow cell. The sheath liquid or a sample is pumped from the sample probe to the flow cell by the piston pump and switch of the reversing valve.

In some embodiments according to the present disclosure, the sample processor comprises: a waste pipeline connected to a wash station which is located at the sample probe; and a waste pump provided in the waste pipeline. The waste pump is configured to discharge waste fluid from the wash station through the waste pipeline.

In some embodiments according to the present disclosure, the sample processor comprises: a discharge pipeline provided downstream of the flow cell; and a vacuum pump provided in the discharge pipeline. The vacuum pump is configured to suck fluid from a wash station located at the sample probe through the sample pipeline into the flow cell.

According to yet another aspect of the present disclosure, there is provided a computer-readable medium on which a program is stored. The program is executed by a processor of a control device (e.g., on an associated personal computing device, on a dedicated device, etc.) to implement the method described above.

### TECHNICAL EFFECTS

The method and the sample processor according to the present disclosure perform background detection on the sample pipeline of the sample processor by using the sheath liquid, which can omit the preparation of a detection agent for background detection, thus significantly reducing the cost, and avoiding the introduction of impurities and increasing the background when the detection agent is loaded into the sample processor. Therefore, the method and the sample processor according to the present disclosure can ensure or improve the detection precision. In addition, the method and the sample processor according to the present disclosure can save the time for replacing the sample container with the detection agent container, thereby simplifying the operation process and improving the efficiency.

The method and the sample processor according to the present disclosure perform background detection by using the sheath liquid supplied to the wash station at the sample container, which can simplify the structure. The sheath liquid supplied to the wash station is used to clean the open end of the sample probe inserted into the sample container for aspirating the sample. Therefore, after the open end of the sample needle is cleaned, the sheath liquid is clean, and can be directly supplied to the flow cell via the sample probe and the sample pipeline for background detection, which can prevent the sample probe from moving up and down, thus simplifying the operation process and shortening the running time, Therefore, the method and the sample processor according to the present disclosure can improve the efficiency and further reduce the cost.

The method and the sample processor according to the present disclosure are provided with the nano-scaled filter in the sheath detection pipeline, so as to ensure that the background noise in the sheath liquid is sufficiently low.

The above and other objects, features and advantages of the present disclosure are fully understood through the detailed description given below and the accompanying drawings given for describing rather than limiting the present disclosure.

### BRIEF DESCRIPTION OF THE DRAWINGS

The features and advantages of one or more embodiments of the present disclosure will become more readily understood from the following description with reference to the accompanying drawings. In the drawings:
FIG. 1 is a functional block diagram of a sample processor;
FIG. 2 is a schematic diagram of a part of the sample processor according to an embodiment of the present disclosure;
FIG. 3 is a schematic diagram of a variant of the sample processor in FIG. 2;
FIG. 4 is a schematic diagram of another variant of the sample processor in FIG. 2; and
FIG. 5 is a flowchart of a method for background detection of a sample pipeline of a sample processor according to an embodiment of the present disclosure.

### DETAILED DESCRIPTION OF EMBODIMENTS

The present disclosure is described in detail hereinafter by means of exemplary embodiments with reference to the accompanying drawings. In several drawings, similar reference numerals refer to similar parts and components. The following detailed description of the present disclosure is for explanation only and is by no means intended to limit the present disclosure and the disclosures or usages thereof. The embodiments described in this specification are not exhaustive, but are only some of a number of possible embodiments. The exemplary embodiments may be implemented in many different forms, and should not be construed as limiting the scope of the present disclosure. In some exemplary embodiments, well-known processes, well-known device structures, and well-known technologies may not be described in detail.

Before at least one embodiment of the present disclosure is explained in detail, it is to be understood that the present disclosure is not limited in its disclosure to the details of construction and the arrangement of the components set forth in the following description or illustrated in the drawings. The present disclosure is applicable to other embodiments that may be practiced or carried out in various ways as well as to combinations of the disclosed embodiments. In addition, it is to be understood that the phraseology and terminology employed herein is for the purpose of description and should not be regarded as limiting.

Unless specifically stated otherwise, as apparent from the following discussions, it is appreciated that throughout the specification discussions utilizing terms such as "controlling", "processing", "calculating", "determining", "deriving" or the like, refer to the action and/or processes of a computer or computing system, or similar electronic computing device, that manipulates and/or transforms data represented as physical, such as electronic, quantities within the computing system's registers and/or memories into other data similarly represented as physical quantities within the computing system's memories, registers or other such information storage, transmission or display devices.

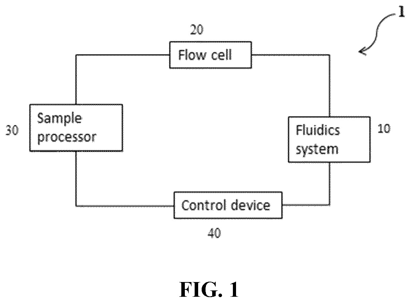

The main functional parts of a sample processor 1 will be described below with reference to FIG. 1. The sample processor according to the present disclosure may be any suitable instrument for processing (e.g., detection or sorting) biological or non biological samples. For example, in some embodiments, the sample processor may be a flow cytometer. The sample processed (for example, analyzed or sorted) by the sample processor 1 may include biological particles such as exosomes or extracellular vesicles or non-biological particles such as beads. The sample processor 1 is optimized for detecting and measuring particles at the nano-level (e.g., nanoparticles, nanobeads, exosomes), but the sample processor according to the present disclosure can also be used for larger particles.

FIG. 1 is a functional block diagram of the sample processor 1. As shown in FIG. 1, the sample processor 1 includes a fluidics system 10, a flow cell 20, a sample processing unit 30 and a control device 40.

The fluidics system 10 is configured to supply various fluids to the flow cell 20 and to discharge the fluid out of the flow cell 20. The fluids described herein may include samples to be analyzed, sorted or otherwise processed, sheath fluid, cleaning agents, waste fluids, and the like. The fluidics system 10 may include various fluidics components such as pipelines, pumps, valves, pressure regulating devices, sensors, etc., for delivering fluid or discharging fluid.

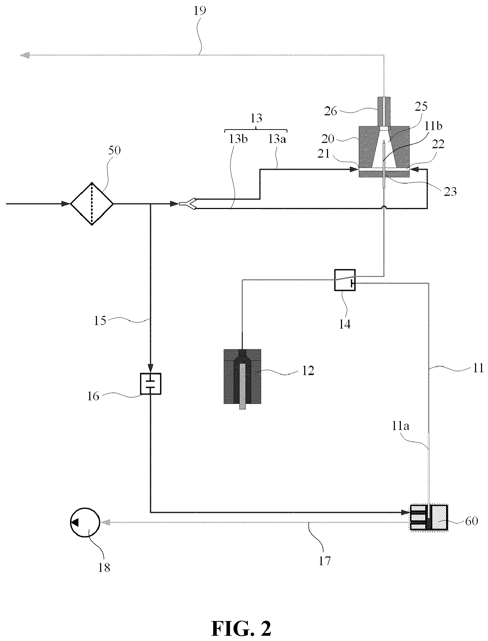

Various fluids, particularly samples and sheath fluid, are delivered to the flow cell 20. Referring to FIG. 2, the flow cell 20 includes two opposite sheath ports 21 and 22, and the sheath fluid is delivered to the chamber 25 of the flow cell 20 through the sheath ports 21 and 22. The flow cell 20 further includes a sample port 23, and the sample is delivered to the chamber 25 through the sample port 23. In the chamber 25, the sample is wrapped by sheath fluid and then flows through the cuvette 26 for processing. The cuvette 26 forms the processing area of the sample. For example, the optical detection device focuses the light beam in the processing area of the cuvette 26. In case that the particles in the sample pass through the processing area of the cuvette 26, the characteristics of the particles are determined by measuring the light scattered or emitted from the particles.

The sample processing unit 30 processes the sample wrapped in the sheath fluid flowing through the cuvette 26. For example, the sample processing unit 30 may measure characteristics of particles/cells in the sample and quantify the particles/cells having particular characteristics, and/or the sample processing unit 30 may sort particles/cells in the sample based on their characteristics. The sample processing unit 30 may include various optical devices, electrical devices, and/or mechanical devices according to the aim of sample processing.

The control device 40 controls the operation of the entire sample processor 1. The various functions, actions, or steps of the various systems, devices, components, or methods of the sample processor according to the present disclosure are controlled by the control device 40. The control device 40 will be described in detail below.

The sample processor according to an embodiment of the present disclosure is described below with reference to FIG. 2, and FIG. 2 is a schematic diagram of a part of the sample processor 1 according to the embodiment of the present disclosure, that is, a part of the fluidics system 10 and the flow cell 20.

Referring to FIG. 2, the fluidics system 10 includes a sample pipeline 11, a sheath supply pipeline 13, a sheath detection pipeline 15, a waste pipeline 17 and a discharge pipeline 19.

The sample pipeline 11 is configured to connect a sample container (not shown) to the flow cell 20, and includes a sample probe 11a for aspirating a sample out of the sample container and a sample probe 11b fitted in the sample port 23 of the flow cell 20. The sample probe 11a and the sample probe 11b are respectively located at two ends of the sample pipeline 11. A piston pump 12 and a three-way directional valve 14 are provided in the sample pipeline 11. The three-way directional valve 14 is configured to be switched between a first position for communicating the sample container to the piston pump 12 and a second position for communicating the piston pump 12 to the flow cell 20. In a case that the three-way directional valve 14 is located in the first position, the piston pump 12 can aspirate the sample out of the sample container. The three-way directional valve 14 is switched to the second position, so that the piston pump 12 pumps the aspirated sample to the flow cell 20. The piston pump 12 and the three-way directional valve 14 are repeatedly operated in such a way to deliver the sample to the flow cell 20 via the sample pipeline 11 for processing.

When the sample is processed, the sheath liquid is supplied from a sheath container (not shown) to the flow cell 20 via the sheath supply pipeline 13. Generally, the flow cell 20 has two opposite sheath ports 21 and 22, so the sheath supply pipeline 13 includes two branch pipelines 13a and 13b which are respectively connected to the sheath ports 21 and 22. In the flow cell 20, the sample is wrapped in the sheath liquid, so that the particles in the sample flow through the cuvette 26 in a linear manner, thus facilitating the detection or processing of the particles.

A wash station 60 is provided at the sample probe 11a. The wash station 60 is configured to collect waste liquid for cleaning the sample pipeline 11, and to clean an end of the sample probe 11a. The sample container (not shown) may be placed below the wash station 60. When the sample needs to be aspirated, the sample probe 11a moves downward, enters the sample container and immerses in the sample. When the sample probe needs to be cleaned, the sample probe 11a moves upward, so that the end of the sample probe 11a is located in the wash station, thereby cleaning the end of the sample probe.

The sheath detection pipeline 15 is configured to connect the sheath container (not shown) to the wash station 60. The sheath liquid can be supplied to the wash station 60 through the sheath detection pipeline 15, so as to clean the sample probe 11a, especially the outer circumference and the end of the sample probe 11a. A valve 16 is provided in the sheath detection pipeline 15 and configured to control communication or interruption of the sheath detection pipeline 15. For example, the valve 16 may be an on-off valve.

The waste pipeline 17 is connected to the wash station 60. The waste liquid for cleaning the sample pipeline 11 and the waste liquid for cleaning the end of the sample probe 11a may be discharged through the waste pipeline 17. A waste pump 18 may be provided in the waste pipeline 17.

After the sample pipeline 11 and the sample probe 11a are cleaned, the sheath liquid supplied to the wash station 60 by the sheath detection pipeline 15 is clean. The inventor of the present application proposes to use the clean sheath liquid to perform background detection of the sample pipeline 11. That is, the clean sheath liquid in the wash station 60 can be directly supplied from the end of the sample probe 11a to the flow cell 20 via the sample pipeline 11, and background detection is performed when the sheath liquid flows through the cuvette 26 of the flow cell 20. The end of the sample probe 11a may be maintained in the wash station without moving. In contrast, in the existing sample processor, the sample probe is required to move downwards and inserted into a detection agent container so as to suck the detection agent for background detection.

A filter 50 may be further provided in the sheath detection pipeline 15. Impurities in the sheath fluid can be filtered by the filter 50, thus reducing the background noise of the sheath fluid itself. Preferably, the smaller the size of particles or impurities that can be filtered by the filter 50 is, the smaller the background noise of the sheath itself is. For example, the filter 50 can filter nano-scaled particles or impurities, which is particularly suitable for the nano-scaled sample processor, that is, the sample processor can process the nano-scaled particles in the sample.

The filter 50 may be arranged in a common section of the sheath detection pipeline 15 and the sheath supply pipeline 13. In this way, a single filter 50 can meet the requirements of both background detection and sample detection.

A discharge pipeline 19 is provided downstream of the flow cell 20 and configured to discharge fluid or waste liquid out of the flow cell 20. The fluid or waste liquid in the flow cell 20 is the processed sample, the sheath liquid, or the washing liquid, for example.

It should be understood that the sample processor according to the present disclosure is not limited to the specific embodiment shown in FIG. 2, but may be varied as needed.

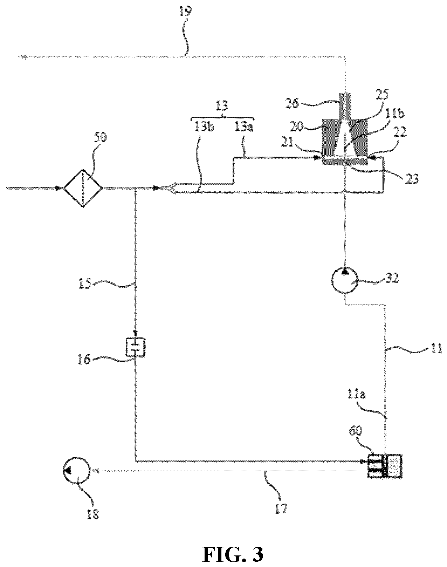

FIG. 3 is a schematic diagram of a variant of the sample processor in FIG. 2. In the variant shown in FIG. 3, a peristaltic pump 32 is used to replace the piston pump 12 in FIG. 2, and the three-way directional valve 14 in FIG. 2 is omitted. The function of the peristaltic pump 32 is the same as the function of the piston pump 12 and the three-way directional valve 14. The fluid (the sheath liquid) in the wash station 60 can be pumped into the flow cell 20 by the peristaltic pump 32 for background detection.

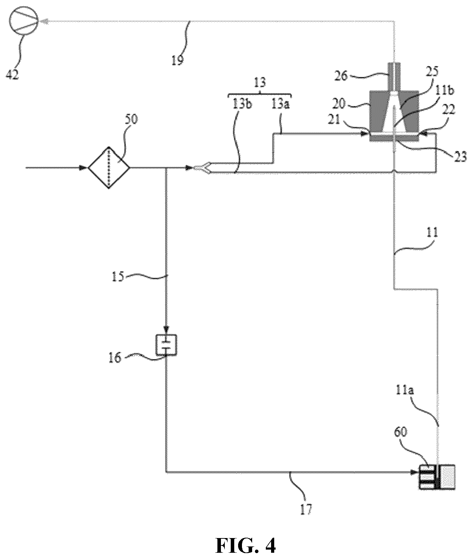

FIG. 4 is a schematic diagram of another variant of the sample processor in FIG. 2. In the variant shown in FIG. 4, the waste pipeline 17 and the waste pump 18 in FIG. 2 are omitted, and a vacuum pump 42 is provided in the discharge pipeline 19 to replace the piston pump 12 and the three-way directional valve 14 in FIG. 2. The vacuum pump 42 is configured to suck fluid in the wash station 60 located at the sample probe 11a into the flow cell 20 through the sample pipeline 11 for background detection, and then pump the fluid from the flow cell 20 to the discharge pipeline 19 for discharge.

It should be noted that the sample processor and its various components according to the present disclosure may be varied as needed, and should not be limited to the specific examples shown in the figures. For example, it may be possible to add an additional component, omit or replace a component as needed.

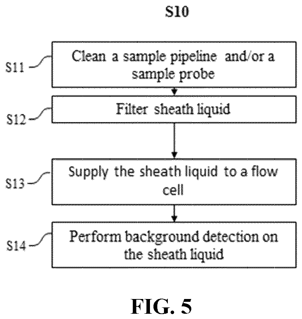

FIG. 5 is a flowchart of a method S10 for background detection of a sample pipeline of a sample processor according to an embodiment of the present disclosure. The method S10 is generally executed before sample processing, so as to obtain more accurate results when the sample is processed.

As shown in FIG. 5, the method S10 includes supplying sheath liquid to the flow cell (step S13) and perform background detection on the sheath liquid in the flow cell (step S14). The method S10 according to the present disclosure uses the sheath liquid to make background detection, which can omit the preparation of a detection agent (such as pure water) for background detection, thereby significantly reducing the cost.

In the step S13, the sheath liquid is supplied to the flow cell via a sample pipeline. In the existing sample processor, it is necessary to replace the processed sample container with the container containing the prepared detection agent, and impurities may be introduced at this time. In contrast, the method S 10 according to the present disclosure can omit the step of replacing the containers, thereby avoiding the introduction of impurities and increasing the background during replacement. Therefore, the method according to the present disclosure can ensure or improve the precision and accuracy of the processing. Accordingly, the method S10 according to the present disclosure can save the time for replacing containers, thereby simplifying the operation process and improving the efficiency.

Before introducing the sheath liquid into the sample pipeline, the method S10 may further include filtering the sheath liquid (step S12). As shown in FIGS. 2 to 4, before the sheath liquid is supplied to the wash station 60, the sheath liquid flows through the filter 50, thereby filtering the sheath liquid. Filtering out large particles (or impurities) in the sheath fluid by the filter can reduce the background noise of the sheath fluid itself. The sheath liquid with sufficiently low background noise can have the same function as the prepared detection agent (pure water). Therefore, the filter may be selected or designed according to the detection requirements.

In the step S 13, the sheath liquid supplied to the wash station (the wash station 60 as shown in FIGS. 2 to 4) which is located at the sample container (not shown) is introduced into the sample pipeline for background detection. As described above, the sheath liquid is supplied to the wash station 60 via the sheath detection pipeline 17 for cleaning the sample probe 11a, and the sheath liquid is clean after the sample probe 11a is cleaned, so the sheath liquid can be directly used for background detection.

Since the sheath liquid supplied to the wash station for cleaning the sample probe 11a can be directly used for background detection, a position of the sample probe can be maintained unchanged, that is, a position of the sample probe during cleaning can be maintained. When the sample probe is cleaned, the open end of the sample probe is in the wash station, so the sheath liquid can be aspirated directly through the open end of the sample probe for background detection. In this way, the sample probe can be prevented from moving up and down. In the existing sample processor, after the sample container is replaced with the container filled with the detection agent (such as pure water), the sample probe needs to move downward and immerse in the detection agent before the detection agent is aspirated. In contrast, the sample processor according to the present disclosure can simplify the operation process and shorten the running time. Therefore, the method according to the present disclosure can further improve the efficiency and reduce the cost.

Before the background detection (that is, the step S13) is performed, each pipeline and/or each fluidics component is generally cleaned (referring to step S11), so as to ensure that each pipeline and each fluidics component are clean and ready for sample processing. The pipeline and the fluidics component include the sample pipeline and the sample probe.

The step S11 may be executed after sample processing, being ready for the next sample processing. Furthermore, the step S11 may be executed after it is determined that the background detection data cannot meet the requirements. Specifically, the background detection data obtained in the step S14 may be compared with predetermined background data. If the background detection data is larger than the predetermined background data, it is possible to return to the step S11 to clean the sample pipeline and/or the sample probe again.

If the background detection data obtained in the step S14 is smaller than or equal to the predetermined background data, it indicates that the background requirements have been met and it is ready to detect a sample.

It can be understood that the predetermined background data can be determined according to the sample processing requirements. Different particles in the sample to be processed may have different processing requirements and different predetermined background data.

It should be understood that the method according to the present disclosure is not necessarily limited to the specific embodiments shown in the figures and described herein, but may be varied as needed. For example, it is possible to add an additional step, or reduce a step as needed. Moreover, the execution order of individual steps of the method may be changed without contradiction.

The above method may be implemented by the control device 40. The control device 40 in the present disclosure may include a processor implemented as a computer or a computing system. The method of operating and cleaning the sample processor and the method of monitoring the cleaning of the sample processor described herein may be implemented by one or more computer programs executed by the processor of the computer. A computer program includes processor-executable instructions stored on a non-transitory tangible computer readable medium. The computer program may further include stored data. Non-limiting examples of non-transitory tangible computer-readable media are non-volatile memory, magnetic storage devices, and optical storage devices.

The term computer-readable medium does not include transient electrical or electromagnetic signals that propagate by means of the medium (such as on a carrier); the term computer-readable medium may therefore be considered to be tangible and non-transitory. Non-limiting examples of non-transitory tangible computer-readable medium are non-volatile memory (such as flash memory, erasable programmable read-only memory or mask read-only memory), volatile memory (such as static random access memory circuit or dynamic random access memory), magnetic storage medium (such as analog or digital magnetic tapes or hard drives), and optical storage medium (such as CD, DVD, or Blu-ray Disc).

Although the present disclosure has been described with reference to exemplary embodiments, it should be understood that the present disclosure is not limited to the specific embodiments described and illustrated herein. Without departing from the scope defined by the claims, those skilled in the art can make various changes to the exemplary embodiments. Provided that there is no contradiction, the features in the various embodiments can be combined with each other. Alternatively, a certain feature in the embodiment may also be omitted.

## Claims

1. A method for background detection of a sample pipeline of a sample processor, wherein the sample pipeline connects a sample probe for aspirating a sample out of a sample container to a flow cell,
the method comprises the following steps executed by a control device:
supplying sheath liquid to the flow cell via the sample pipeline; and
detecting the sheath liquid flowing through the flow cell to obtain background detection data.

2. The method according to claim 1, further comprising:
before the sheath liquid is introduced into the sample pipeline, filtering the sheath liquid by allowing the sheath liquid to flow through a filter.

3. The method according to claim 2, wherein the filter is configured to filter a nano-scaled particle.

4. The method according to claim 2, wherein a wash station is provided at the sample needle, and a sheath detection pipeline is provided between the wash station and a sheath container, and the filter is arranged in the sheath detection pipeline,
the method further comprises:
supplying the sheath liquid in the sheath container to the wash station via the sheath detection pipeline; and
supplying the sheath fluid in the wash station to the flow cell via the sample pipeline for background detection.

5. The method according to claim 4, the method further comprising:
before the sheath liquid is introduced into the sample pipeline for the background detection, cleaning the sample probe in the wash station; and
discharging the cleaned waste liquid by a waste pump through a waste pipeline connected to the wash station, or by a vacuum pump through the sample pipeline and then out of the flow cell.

6. The method according to claim 5, wherein during the sheath cleaning of the sample probe and during the background detection, an open end of the sample probe is maintained in the wash station.

7. The method according to claim 4, wherein a valve is provided in the sheath detection pipeline and configured to control communication or interruption of the sheath detection pipeline.

8. The method according to any one of claims 1 to 7, further comprising:
cleaning the sample pipeline before the sheath liquid is introduced into the sample pipeline for background detection.

9. The method according to any one of claims 1 to 7, further comprising:
comparing the background detection data with predetermined background data, wherein
if the background detection data is larger than the predetermined background data, the method further comprises cleaning the sample pipeline; and
if the background detection data is smaller than or equal to the predetermined background data, it is ready to detect a sample.

10. A sample processor comprising a control device that is configured to implement the method according to any one of claims 1 to 9.

11. The sample processor according to claim 10, wherein a peristaltic pump is provided in the sample pipeline, and configured to pump the sheath liquid or a sample from the sample probe to the flow cell.

12. The sample processor according to claim 10, wherein a piston pump and a reversing valve are provided in the sample pipeline, the reversing valve can be switched between a first position for communicating the sample probe to the piston pump and a second position for communicating the piston pump to the flow cell, and the sheath liquid or a sample is pumped from the sample probe to the flow cell by the piston pump and switch of the reversing valve.

13. The sample processor according to claim 11 or 12, wherein the sample processor comprises: a waste pipeline connected to a wash station which is located at the sample probe; and a waste pump provided in the waste pipeline, and
wherein the waste pump is configured to discharge waste fluid in the wash station through the waste pipeline.

14. The sample processor according to claim 10, wherein the sample processor comprises: a discharge pipeline provided downstream of the flow cell; and a vacuum pump provided in the discharge pipeline, and
the vacuum pump is configured to suck fluid in a wash station located at the sample probe into the flow cell through the sample pipeline.

15. A computer-readable medium on which a program is stored, wherein the program is executed by a processor of a control device to implement the method according to any one of claims 1 to 9.
